# EUROPÄISCHE PATENTANMELDUNG

(11) **EP 2 312 236 A2**
(43) Veröffentlichungstag der Anmeldung: **20.04.2011**
(21) Anmeldenummer: 10174669.1
(22) Anmeldetag: 31.08.2010
(51) Int. Cl.: F24J 2/52, E04B 1/19, E04B 1/26

(54) **Verbindungsvorrichtung für eine Ständerkonstruktion**

(30) Priorität: 30.09.2009 DE 102009045209
(71) Anmelder: HILTI Aktiengesellschaft, 9494 Schaan (LI)
(72) Erfinder: Kemple, Lorcan, 6971, Hard (AT); Mundwiler, Lukas, 4434, Hoelstein (CH)

(57) **Zusammenfassung**

Die Erfindung betrifft eine Verbindungsvorrichtung (21) für eine Ständerkonstruktion aus Stützprofilen (12) und aus Tragprofilen zur Anordnung von Solarpaneelen sowie eine Ständerkonstruktion mit einer Verbindungsvorrichtung (21). Die Verbindungsvorrichtung (21) weist ein Basiselement (22), ein Aufnahmeelement (41) und eine Feststelleinrichtung (61) auf, mittels der das Aufnahmeelement (41) relativ zum Basiselement (22) an diesem festlegbar ist. Das Basiselement (22) weist einen Befestigungsabschnitt (23) sowie einen Auflageabschnitt (29) mit einer dem Aufnahmeelement (41) zugewandten Auflageseite (30) auf. Das Aufnahmeelement (41) weist eine Aufnahme (42) für ein Tragprofil der Ständerkonstruktion sowie einen Anlageabschnitt (44) mit einer dem Basiselement (22) zugewandten Anlageseite (45) auf. Die Feststelleinrichtung (61) weist ein Spannmittel (62) sowie ein Lagermittel (63) auf. Zwischen dem Spannmittel (62) und dem Lagermittel (63) sind ein Anlagebereich (36) und zumindest ein Vertiefungsbereich (37) vorgesehen.

## Beschreibung

Die Erfindung betrifft eine Verbindungsvorrichtung für eine Ständerkonstruktion aus Stützprofilen und aus Tragprofilen, insbesondere zur Anordnung von Solarpaneelen, der im Oberbegriff des Patentanspruchs 1 genannten Art. Weiter betrifft die Erfindung eine Ständerkonstruktion, insbesondere zur Anordnung von Solarpaneelen, mit einer derartigen Verbindungsvorrichtung.

Eine Ständerkonstruktion weist im oder am Untergrund, z. B. im Erdreich, verankerte Stützprofile auf, auf denen als Traggerüst ein Raster aus quer und längs angeordneten Tragprofilen vorgesehen ist. Auf den Tragprofilen werden plattenförmige Elemente, wie Solarpaneele in der gewünschten Ausrichtung festlegt. Die Tragprofile sind beispielsweise Montageschienen, die einfach über entsprechend ausgebildete Befestigungsvorrichtungen miteinander verbindbar und an denen mittels entsprechend ausgebildeter Befestigungsvorrichtungen die plattenförmigen Elemente einfach festlegbar sind. Zwischen den Stützprofilen und einzelnen Tragprofilen sind Verbindungsvorrichtungen vorgesehen.

Die Stützprofile werden zur Verankerung im Untergrund oftmals in diesen gerammt oder in diesen eingeschraubt, so dass eine lotrechte Ausrichtung nach dem Setzen derselben nicht immer gewährleistet ist. Aus der DE 20 2006 014 047 U1 ist eine Verbindungsvorrichtung für eine Ständerkonstruktion aus Stützprofilen und aus Tragprofilen zur Anordnung von Solarpaneelen mit einer Justiermöglichkeit bekannt, welche eine Ausrichtung der Tragprofile an den Stützprofilen ermöglicht.

Diese bekannte Verbindungsvorrichtung weist ein Basiselement, ein Aufnahmeelement und eine Feststelleinrichtung auf, mittels der das Aufnahmeelement relativ zum Basiselement an diesem festlegbar ist. Das U-förmige Basiselement weist zwei Schenkel als Befestigungsabschnitt des Basiselementes zur Anordnung an einem Stützprofil der Ständerkonstruktion sowie einen die beiden Schenkel verbindenden Auflageabschnitt mit einer dem Aufnahmeelement zugewandten Auflageseite auf. Die Schenkel des U-förmigen Basiselementes sind mit Durchführöffnungen für Schrauben und Muttern aufweisende Verspannmittel versehen, welche durch Öffnungen am Ende des entsprechenden Stützprofils hindurchgeführt und zur Festlegung des Basiselementes verspannbar sind. Das Aufnahmeelement ist von zwei L-förmigen Teilen gebildet, zwischen denen eine Aufnahme für ein Tragprofil der Ständerkonstruktion ausgebildet ist. Die Flansche der L-förmigen Teile bilden jeweils einen Anlageabschnitt mit einer dem Basiselement zugewandten Anlageseite.

Die Feststelleinrichtung dieser Verbindungsvorrichtung umfasst Langlöcher, welche in den Montageflanschen angeordnet sind und quer zur Längserstreckung des in der Aufnahme aufgenommenen Tragprofils verlaufen. Weiter sind im Auflageabschnitt des Basiselementes mit den Langlöchern der Montageflansche in Überlappung bringbare, quer zu diesen, d. h. in Richtung der Längserstreckung des in der Aufnahme aufgenommenen Tragprofils verlaufende Langlöcher vorgesehen. In den sich kreuzenden Langlöcher sind jeweils Schrauben mit Muttern als Spannmittel zur Festlegung des Aufnahmeelementes an dem Basiselement vorgesehen. Nach dem Lösen der vier Spannmittel ist das Aufnahmeelement relativ zu dem Basiselement versetzbar.

Nachteilig an der bekannten Lösung ist, dass die Feststelleinrichtung eine Vielzahl von Spannmitteln aufweist, die zur Festlegung des Aufnahmeelementes an dem Basiselement angeordnet und jeweils separat verspannt werden müssen. Insbesondere bei Solarparks mit einer Vielzahl von Stützprofilen bedingt diese Verbindungsvorrichtung einen hohen Montageaufwand.

Aufgabe der Erfindung ist es, eine Verbindungsvorrichtung für eine Ständerkonstruktion zu schaffen, welche die vorgenannten Nachteile nicht aufweist und insbesondere eine einfache sowie flexible Montage einer Ständerkonstruktion erlaubt.

Die Aufgabe ist durch die Merkmale der unabhängigen Ansprüche gelöst. Vorteilhafte Weiterbildungen sind in den Unteransprüchen dargelegt.

Gemäss der Erfindung weist die Feststelleinrichtung zumindest ein Spannmittel sowie zumindest ein Lagermittel auf und zwischen dem Spannmittel und dem Lagermittel sind ein Anlagebereich und zumindest ein Vertiefungsbereich vorgesehen.

Im verspannten Zustand der Feststelleinrichtung liegt das Aufnahmeelement flächig im Bereich des Anlagebereichs an dem Basiselement an. Im Bereich des Vertiefungsbereichs sind das Aufnahmeelement und das Basiselement durch einen Spalt beziehungsweise durch einen Freistich zueinander beabstandet, welcher sich aufgrund des zumindest einen Vertiefungsbereichs ergibt. Wird das zumindest eine Spannmittel gelöst, kippt das Aufnahmeelement um die Kippachse, welche von dem Übergangsabschnitt zwischen dem Anlagebereich und dem Vertiefungsbereich gebildet ist. In diesem Zustand der Verbindungsvorrichtung ist das Aufnahmeelement zur Justierung relativ zu dem Basiselement versetzbar. Wird anschliessend das zumindest eine Spannmittel wieder verspannt, kippt das Aufnahmeelement zurück, so dass das Aufnahmeelement und das Basiselement wieder im Bereich des Anlagebereichs miteinander in Anlage sind. In diesem Zustand der Verbindungsvorrichtung ist das Aufnahmeelement in der gewünschten Ausrichtung relativ zum Basiselement fixiert.

Für die Justierung und Fixierung des Aufnahmeelementes relativ zum Basiselement muss nur das zumindest eine Spannmittel gelöst beziehungsweise verspannt werden, womit der Montageaufwand gegenüber der bekannten Lösung massgeblich reduziert ist. Zudem reichen für die Feststelleinrichtung ein Spannmittel, welches vorteilhaft als Spannschraube ausgebildet ist, und ein Lagermittel aus, das beispielsweise als Spannschraube oder als Halteniet z. B. mit zwei Nietköpfen ausgebildet ist. Die erfindungsgemässe Verbindungsvorrichtung weist eine geringe Anzahl von Teilen auf und ist somit besonders wirtschaftlich herstellbar.

Für eine kompakte Ausbildung der Verbindungsvorrichtung sind das zumindest eine Spannmittel und das zumindest eine Lagermittel am Anlageabschnitt vorteilhaft innerhalb der Aufnahme des Aufnahmeelementes vorgesehen.

Die Verbindungsvorrichtung wird vorteilhaft werkseitig vormontiert und im zusammengefügten Zustand dem Anwender zur Verfügung gestellt. Somit müssen neben einem geeigneten Werkzeug keine weiteren Teile der Verbindungsvorrichtung separat mitgeführt werden. Vorteilhaft weisen alle Verspannmittel der Verbindungsvorrichtung jeweils das gleiche Drehangriffsmittel auf, so dass für die Montage und Justierung der Verbindungsvorrichtung nur eine Art von Werkzeug benötigt wird.

Vorzugsweise ist das zumindest eine Spannmittel im Anlagebereich und das zumindest eine Lagermittel ist im zumindest einen Vertiefungsbereich vorgesehen, womit ein einfaches Justieren des Aufnahmeelementes relativ zum Basiselement im gelösten Zustand des Spannmittels gewährleistet ist.

Bevorzugt ist ein Absatz zwischen dem Anlagebereich und dem zumindest einen Vertiefungsbereich vorgesehen, welcher eine einfache Ausbildung der Kippachse beziehungsweise des Vertiefungsbereichs am entsprechenden Element der Verbindungsvorrichtung ermöglicht. Der Absatz verläuft vorteilhaft in einer Neigung, welche mit der von dem Anlagebereich aufgespannten Ebene einen Winkel von weniger als 90° und besonders vorteilhaft einen Winkel im Bereich von 40° bis 50° einschliesst, womit extreme Spannungsspitzen im Material des entsprechenden Elementes im Übergangsbereich zwischen dem Vertiefungsbereich und dem Anlagebereich vermieden werden.

Vorzugsweise ist der Absatz an der Auflageseite des Auflageabschnitts des Basiselementes vorgesehen, womit im gelösten Zustand der Festlegeeinrichtung das Aufnahmeelement einfach relativ zum Basiselement versetzbar ist.

Alternativ ist der Absatz an der Anlageseite des Anlageabschnitts des Aufnahmeelementes vorgesehen. In einer weiteren Variante ist sowohl an der Auflageseite des Auflageabschnitts des Basiselementes und an der Anlageseite des Anlageabschnitts des Aufnahmeelementes jeweils ein Absatz vorgesehen, womit ein besonders grosser Spalt zwischen dem Basiselement und dem Aufnahmeelement geschaffen wird, ohne die Materialstärke eines der Elemente der Verbindungsvorrichtung massgeblich zu schwächen.

Bevorzugt weist der Auflageabschnitt des Basiselementes einen den Befestigungsabschnitt an zumindest einer Seite des Befestigungsabschnitt überragenden Fixierabschnitts auf und zumindest ein Teil der Feststelleinrichtung ist im Bereich dieses Fixierabschnitts vorgesehen. Der an dem zumindest einseitig überragenden Fixierabschnitt angeordnete Teil der Feststelleinrichtung ist weiterhin von aussen her zum Festlegen des Aufnahmeelementes relativ zum Basiselement zugänglich, auch wenn die Verbindungsvorrichtung an dem Stützprofil angeordnet ist. Vorteilhaft ist das zumindest eine Spannmittel als Teil der Feststelleinrichtung im Bereich des Fixierabschnitts vorgesehen.

Vorzugsweise weist das Basiselement eine erste Durchführöffnung für das zumindest eine Spannmittel und eine zweite Durchführöffnung für das zumindest eine Lagermittel im Auflageabschnitt auf und das Aufnahmeelement weist eine erste Durchführöffnung für das zumindest eine Spannmittel und eine zweite Durchführöffnung für das zumindest eine Lagermittel im Anlageabschnitt auf, wobei zumindest eine dieser Durchführöffnungen als Langloch ausgebildet ist. Das zumindest eine Langloch ermöglicht eine einfache Versetzbarkeit in einem durch die Abmessungen des Langlochs vordefinierten Bereich.

Vorteilhaft ist eine der Durchführöffnungen eines Elementes als gekrümmt verlaufendes Langloch ausgebildet, wobei der Radius des Langlochs dem Abstand des Langlochs zu der benachbarten Durchführöffnung im entsprechenden Element entspricht und wobei die konkave Längsseite des Langlochs dieser Durchführöffnung zugewandt ist. Alternativ sind zumindest die zwei Durchführöffnungen des Aufnahmeelementes und des Basiselementes, welche im zusammengesetzten Zustand der Verbindungsvorrichtung einander gegenüberliegen als Langlöcher ausgebildet, welche sich kreuzend überlappen.

Bevorzugt ist die erste Durchführöffnung für das zumindest eine Spannmittel im Auflageabschnitt des Basiselementes als Langloch ausgebildet, womit eine einfache Justierbarkeit der Verbindungsvorrichtung und des darin aufgenommenen Tragprofils gewährleistet ist. Vorteilhaft ist die erste Durchführöffnung als gekrümmt verlaufendes Langloch ausgebildet, wobei der Radius des Langlochs dem Abstand des Langlochs zu der zweiten Durchführöffnung im Basiselement entspricht und die konkave Längsseite des Langlochs dieser Durchführöffnung zugewandt ist. Das Aufnahmeelement ist im gelösten Zustand der Verbindungsvorrichtung um eine von dem zumindest einen Lagermittel gebildeten Schwenkachse relativ zu dem Basiselement verschwenkbar.

Vorzugsweise weist eine der Durchführöffnungen einen Gewindeabschnitt für ein am zumindest einen Spannmittel und/oder für ein am zumindest einen Lagermittel angeordnetes Gewinde auf, womit auf zusätzlich angeordnete Verspannelemente, wie z. B. Muttern, zum Verspannen des zumindest einen Spannmittel und/oder des zumindest einen Lagermittels verzichtet werden kann. Dadurch weist die Verbindungsvorrichtung wesentlich weniger Einzelteile auf, womit diese noch einfacher handhabbar und wirtschaftlich zu fertigen ist.

Bevorzugt weisen die erste Durchführöffnung für das zumindest eine mit einem Gewinde versehene Spannmittel im Anlageabschnitt des Aufnahmeelementes einen Gewindeabschnitt und die zweite Durchführöffnung für das zumindest eine mit einem Gewinde versehene Lagermittel im Auflageabschnitt des Basiselementes einen Gewindeabschnitt auf, womit die Verbindungsvorrichtung einfach verspannbar und lösbar ist.

Vorteilhaft weist das Aufnahmeelement eine Festlegeeinrichtung zum Festlegen des in der Aufnahme aufgenommenen Tragprofils auf, die eine Bohrung sowie ein dazu beabstandetes gekrümmt verlaufendes Langloch umfasst. Der Radius des gekrümmt verlaufenden Langlochs entspricht vorteilhaft dem Abstand des Langlochs zu der Bohrung und die konkave Längsseite des Langlochs ist dieser Bohrung zugewandt. Weiter umfasst die Festlegeeinrichtung zumindest ein Hintergreifelement, das in eine entsprechend am Tragprofil ausgebildete Hintergreifnut eingreift und das um ein durch die Bohrung hindurchgeführtes Spannmittel verschwenkbar ist. Dies ermöglicht eine einfache Anpassung der Neigung des Tragprofils entsprechend des zur Verfügung gestellten Schwenkbereichs.

Eine erfindungsgemässe Ständerkonstruktion, insbesondere zur Anordnung von Solarpaneelen, weist mehrere Stützprofile und mehrere Tragprofile auf, wobei zwischen zumindest einem der Stützprofile und zumindest einem der Tragprofile eine Verbindungsvorrichtung vorgesehen ist, welche die vorgenannten Merkmale aufweist. Die Ständerkonstruktion ist mit einem geringen Montageaufwand erstellbar.

Die Erfindung wird nachstehend anhand von Ausführungsbeispielen näher erläutert. Es zeigen:
- Fig.1: Eine Ständerkonstruktion für Solarpaneele mit erfindungsgemässen Verbindungsvorrichtungen in einer Perspektive;
- Fig. 2: eine Verbindungsvorrichtung in einer Explosionsdarstellung;
- Fig. 3: die Verbindungsvorrichtung gem. Fig. 2 im Schnitt;
- Fig. 4: das Detail IV der Verbindungsvorrichtung gem. Fig. 3; und
- Fig.5: ein zweites Ausführungsbeispiel einer Verbindungseinrichtung in einer Seitenansicht.

### Grundsätzlich sind in den Figuren gleiche Teile mit den gleichen Bezugszeichen versehen.

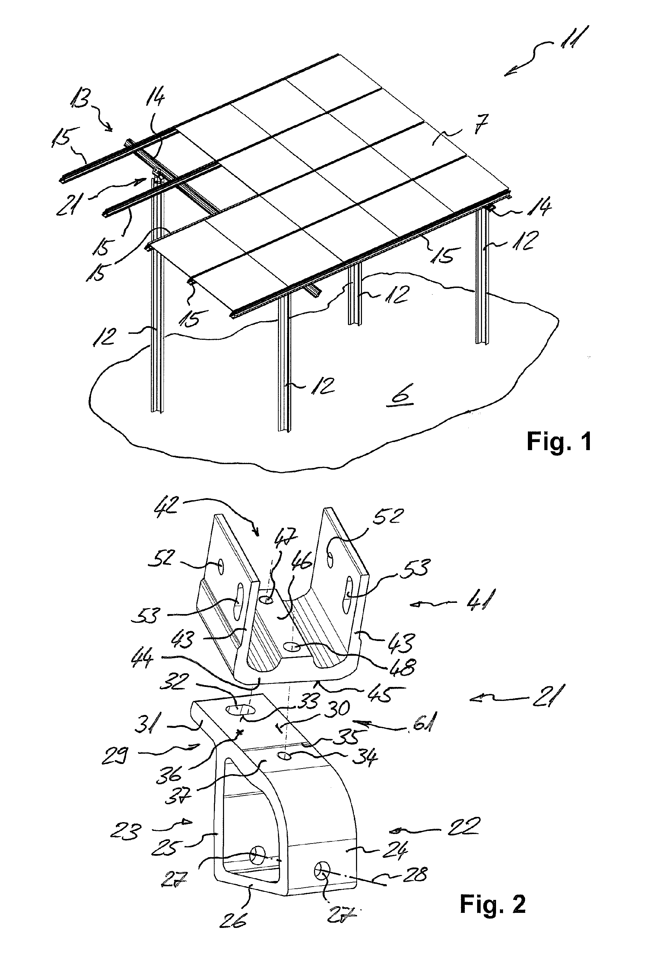

Die in der Figur 1 dargestellte Ständerkonstruktion 11 für Solarpaneele 7 weist mehrere, in den Untergrund gerammte Stützprofile 12 sowie ein Raster 13 aus mehreren Quertragprofilen 14, welche von Stützprofil 12 zu Stützprofil 12 verlaufen, und aus mehreren Längstragprofilen 15 auf, die quer zu den Quertragprofilen 14 angeordnet sind. Zwischen den Stützprofilen 12 und den Quertragprofilen 14, ist jeweils eine Verbindungsvorrichtung 21 vorgesehen.

Die in den Figuren 2 bis 4 im Detail dargestellte Verbindungsvorrichtung 21 weist ein Basiselement 22 und ein Aufnahmeelement 41 auf, das mittels einer Feststelleinrichtung 61 relativ zum Basiselement 22 an diesem festlegbar ist.

Das Basiselement 22 weist einen Befestigungsabschnitt 23 zur Anordnung an einem Stützprofil 12 der Ständerkonstruktion 11 auf, der von zwei, parallel zueinander verlaufenden Seitenwänden 24 und 25 sowie einen diese verbindenden Verbindungsabschnitt 26 gebildet ist. In den Seitenwänden 24 und 25 ist jeweils eine Durchführöffnung 27 für ein als Spannschraube mit Mutter ausgebildetes Verspannmittel 17 vorgesehen. Die Durchführöffnungen 27 liegen auf einer gemeinsamen Achse 28. Das Basiselement 22 wird mit dem Befestigungsabschnitt 23 voran in einen am Stützprofil 12 vorgesehenen Aufnahmeraum 16 eingesetzt und in der gewünschten Höhe relativ zum Stützprofil 12 mittels des Verspannmittels 17 an diesem festgelegt. Für eine Justierung der Position der Verbindungsvorrichtung 21 in Richtung der Längserstreckung des Stützprofils 12 sind zwei einander gegenüberliegende Langlöcher 18 in den einander gegenüberliegenden Wandungen des Stützprofils 12 entlang der Längserstreckung des Stützprofils 12 vorgesehen.

Weiter weist das Basiselement 22 einen Auflageabschnitt 29 mit einer dem Aufnahmeelement 41 zugewandten Auflageseite 30 auf. Die von dem Auflageabschnitt 29 aufgespannte Ebene schliesst mit der von der Seitenwand 24 aufgespannten Ebene einen Winkel A im Bereich von 90° bis 140° ein. Dieser Winkel A wird vorteilhaft entsprechend der Neigung gewählt, welche das in dem Aufnahmeelement 41 aufgenommene Quertragprofil 14 aufweisen soll und welche nahezu der gewünschten Neigung der Solarpaneele 7 entspricht. Der Auflageabschnitt 29 des Basiselementes 22 weist einen den Befestigungsabschnitt 23 beziehungsweise dessen Seitenwand 25 überragenden Fixierabschnitt 31 auf. Im Fixierabschnitt 31 ist eine erste Durchführöffnung 32 und zwischen den Seitenwänden 24 und 25 des Befestigungsabschnitts 23 ist eine zweite Durchführöffnung 34 im Auflageabschnitt 29 vorgesehen. Die erste Durchführöffnung 32 ist als gekrümmtes Langloch ausgebildet, dessen Radius dem Abstand zur zweiten Durchführöffnung 34 entspricht und dessen konkave Seite 33 der zweiten Durchführöffnung 34 zugewandt ist. Die zweite Durchführöffnung 34 weist ein Innengewinde auf.

Zwischen der ersten Durchführöffnung 32 und der zweiten Durchführöffnung 34 ist ein Absatz 35 an der Auflageseite 30 des Auflageabschnitts 29 vorgesehen, womit ein Anlagebereich 36 und ein Vertiefungsbereich 37 geschaffen wird, der gegenüber einer von dem Anlagebereich 36 aufgespannten Ebene zurückversetzt ist. Der Absatz 35 verläuft geneigt in einem Winkel von etwa 45° in Bezug auf eine von dem Anlagebereich 36 der Auflageseite 30 aufgespannten Ebene.

Das U-förmige Aufnahmeelement 41 weist eine Aufnahme 42 für das Quertragprofil 14 der Ständerkonstruktion 11 auf, die dreiseitig begrenzt ist. Die Aufnahme 42 ist einerseits von zwei einander gegenüberliegenden Seitenwänden 43 und von einem die Seitenwände 43 verbindenden Anlageabschnitt 44 begrenzt. Der Anlageabschnitt 44 weist eine dem Basiselement 22 zugewandte Anlageseite 45 und an seiner gegenüberliegenden Seite einen parallel zu den Seitenwänden 43 verlaufenden Verstärkungssteg 46 auf. Im Bereich des Verstärkungsstegs 46 sind eine erste Durchführöffnung 47, die ein Innengewinde aufweist, und eine zu der ersten Durchführöffnung 47 beabstandete, zweite Durchführöffnung 48 vorgesehen.

An jeder Seitenwand 43 des Aufnahmeelementes 41 ist eine Festlegeeinrichtung 51 zum Festlegen des in der Aufnahme 42 aufgenommenen Quertragprofils 14 vorgesehen. Die Festlegeeinrichtung 51 umfasst in jeder Seitenwand 43 eine Bohrung 52 und ein dazu beabstandetes, gekrümmt verlaufendes Langloch 53. Der Radius des Langlochs 53 entspricht dem Abstand der Bohrung 52 zum Langloch 53 und die konkave Seite des Langlochs 53 ist jeweils der Bohrung 52 zugewandt. Weiter umfasst die Festlegeeinrichtung 51 ein Hintergreifteil 54, das in eine Hintergreifnut 19 des Quertragprofils 14 eingreifen kann und das zwei jeweils mit einem Innengewinde versehene Bohrungen 55 und 56 aufweist. In die Bohrungen 55 und 56 greift jeweils eine Spannschraube 57 und 58 ein, welche durch die Bohrung 52 beziehungsweise durch das Langloch 53 in den Seitenwänden 43 hindurchgeführt sind. Das Hintergreifteil 54 kann um eine von der Spannschraube 58 gebildeten Schwenkachse 59 zur Anpassung der Neigung des in der Aufnahme 42 aufgenommenen Quertragprofils 14 verschwenkt werden.

Die Feststelleinrichtung 61 zum Festlegen des Aufnahmeelementes 41 an dem Basiselement 22 weist neben den Durchführöffnungen 32 und 34 im Basiselement 22 und neben den Durchführöffnungen 47 und 48 im Aufnahmeelement 41 eine erste Spannschraube als Spannmittel 62 auf, das durch die erste Durchführöffnung 32 im Basiselement 22 hindurchgeführt ist und in das Innengewinde der ersten Durchführöffnung 47 im Aufnahmeelement 41 eingreift. Das Spannmittel 62 ist im Anlagebereich 36 des Auflageabschnitts 29 des Basiselementes 22 beziehungsweise als Teil der Feststelleinrichtung 61 im Bereich des Fixierabschnitts 31 des Auflageabschnitts 29 des Basiselementes 22 vorgesehen. Zudem umfasst die Feststelleinrichtung 61 eine zweite Spannschraube als Lagermittel 63, das durch die zweite Durchführöffnung 48 im Aufnahmeelement 41 hindurchgeführt ist und in das Innengewinde der zweiten Durchführöffnung 34 im Basiselement 22 eingreift. Das Lagermittel 62 ist im Vertiefungsbereich 37 des Auflageabschnitts 31 des Basiselementes 22 vorgesehen.

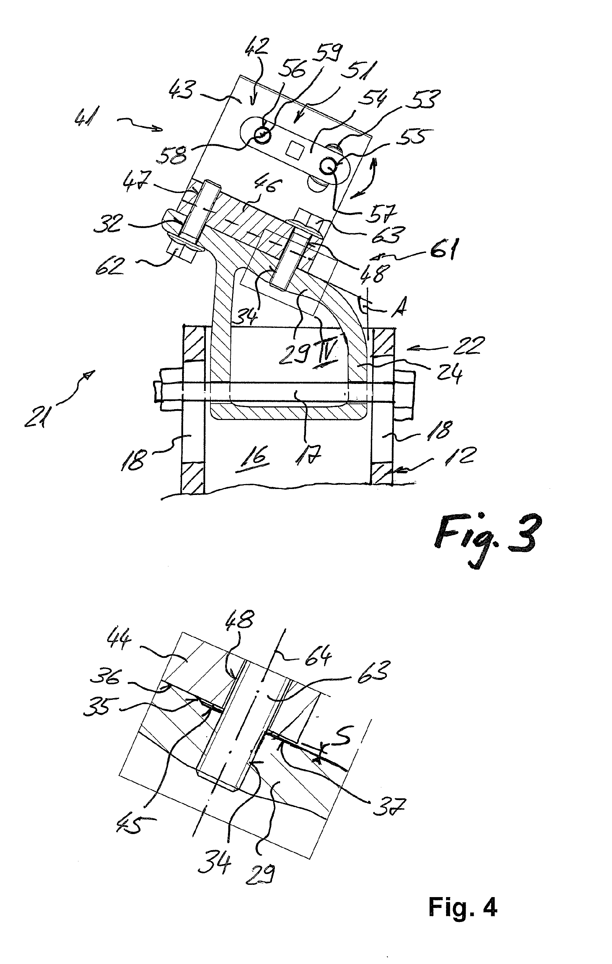

Im verspannten Zustand der Verbindungsvorrichtung 21 (siehe Fig. 3) liegt das Aufnahmeelement 41 im Auflagebereich 36 des Auflageabschnitts 31 flächig an. Aufgrund des rückversetzten Vertiefungsbereichs des Auflageabschnitts 31 ist ein Spalt S geschaffen (siehe Fig. 4). Das Lagermittel 63 wird mit einem geringeren Drehmoment als das Spannmittel 62 angezogen, so dass im verspannten Zustand der Verbindungsvorrichtung 21 eine Zugkraft auf das Lagermittel 63 ausgeübt wird. Dem Anwender wird die Verbindungsvorrichtung 21 vorteilhaft in diesem Zustand zur Verfügung gestellt.

Zum Justieren des Aufnahmeelementes 41 relativ zum Basiselement 22 wird das Spannmittel 62 gelöst, wobei das Aufnahmeelement 41 über die von dem Absatz 35 gebildete Kippkante in Richtung der Seitenwand 24 des Befestigungsabschnitts 23 verkippt. In diesem Zustand ist das Aufnahmeelement 41 um eine von dem Lagermittel 63 gebildete Schwenkachse 64 verschwenkbar, ohne dass das Lagermittel 63 gelöst werden muss. Wird das Spannmittel 62 wieder verspannt, kippt das Aufnahmeelement 41 wieder zurück, bis dieses erneut auf dem Auflagebereich 36 des Auflageabschnitts 31 des Basiselementes 22 flächig anliegt. Gleichzeitig wird wieder das Lagermittel 63 auf Zug beansprucht, womit das Aufnahmeelement 41 in der gewünschten Ausrichtung relativ zum Basiselement 22 fixiert ist. Zum Justieren und Fixieren des Aufnahmeelementes 41 relativ zum Basiselement 22 muss somit nur das Spannmittel 62 gelöst beziehungsweise verspannt werden.

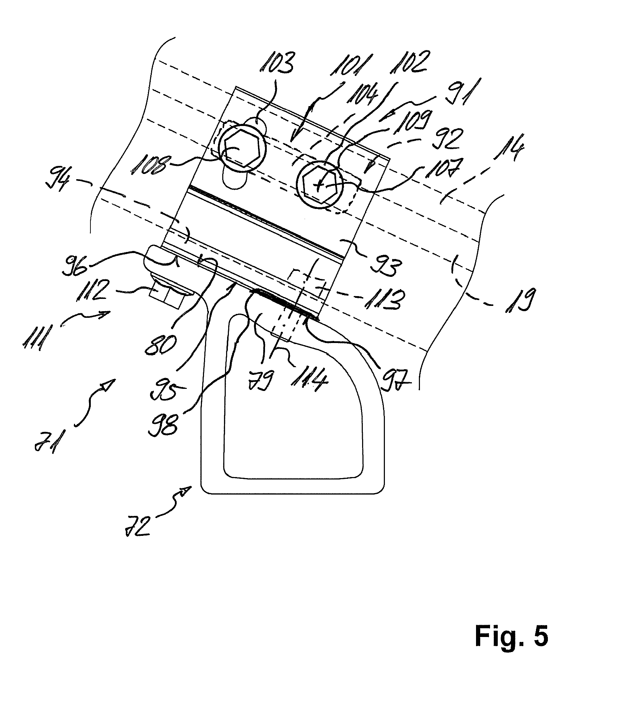

Die in der Figur 5 gezeigte Verbindungsvorrichtung 71 unterscheidet sich von der zuvor dargelegten Verbindungsvorrichtung 21 durch die Anordnung des Anlagebereichs und des Vertiefungsbereichs an der Anlageseite des Aufnahmeelementes sowie durch die andere Ausgestaltung der Festlegeeinrichtung 51 zum Festlegen des in der Aufnahme 42 aufgenommenen Quertragprofils 14. Ansonsten entsprechen die Elemente der Verbindungsvorrichtung 71 in Bezug auf die weiteren Merkmale im Wesentlichen der Verbindungsvorrichtung 21.

Die Auflageseite 80 des Auflageabschnitts 79 des Basiselementes 72 verläuft eben, entlang einer Ebene ohne einen in diesem vorgesehenen Absatz. Das Aufnahmeelement 91 mit der Aufnahme 92 für das Quertragprofil 14 weist an der Anlageseite 95 des Anlageabschnitts 94 einen Absatz 98 auf, der zwischen dem Spannmittel 112 und dem Lagermittel 113 der Feststelleinrichtung 111 einen Auflagebereich 96 und einen Vertiefungsbereich 97 der Anlageseite 95 ausbildet. Beim Lösen des Spannmittels 112 verkippt das Aufnahmeelement 91 zum Basiselement 72 hin und ist relativ zu diesem um die von dem Lagermittel 113 gebildeten Schwenkachse 114 verschwenkbar.

Die an der Seitenwand 93 des Aufnahmeelementes 91 angeordnete Festlegeeinrichtung 101 weist ein Hintergreifteil 104 auf, das in die Hintergreifnut 19 des Quertragprofils 14 eingreift und über die Spannschrauben 107 und 108 zur Festlegung des Quertragprofils 14 in der Aufnahme 92 verspannbar ist. Bei der Verbindungsvorrichtung 71 ist das in der Seitenwand 93 vorgesehene, gekrümmte verlaufende Langloch 103 oberhalb des Spannmittels 112 und die in der Seitenwand 93 vorgesehene Bohrung 102 oberhalb des Lagermittels 113 vorgesehen. Das Hintergreifteil 104 ist um die von der Spannschraube 107 gebildete Schwenkachse 109 zur Anpassung der Neigung des in der Aufnahme 92 aufgenommenen Quertragprofils 14 verschwenkbar.

## Patentansprüche

1. Verbindungsvorrichtung für eine Ständerkonstruktion (11) aus Stützprofilen (12) und aus Tragprofilen (14, 15), insbesondere zur Anordnung von Solarpaneelen (7), mit einem Basiselement (22; 72), mit einem Aufnahmeelement (41; 91) und mit einer Feststelleinrichtung (61; 111) mittels der das Aufnahmeelement (41; 91) relativ zum Basiselement (22; 72) an diesem festlegbar ist, wobei
das Basiselement (22; 72) einen Befestigungsabschnitt (23) zur Anordnung an einem Stützprofil (12) der Ständerkonstruktion (11) sowie einen Auflageabschnitt (29; 79) mit einer dem Aufnahmeelement (41; 91) zugewandten Auflageseite (30; 80) aufweist, und wobei
das Aufnahmeelement (41; 91) eine Aufnahme (42; 92) für ein Tragprofil (14) der Ständerkonstruktion (11) sowie einen Anlageabschnitt (44; 94) mit einer dem Basiselement (22; 72) zugewandten Anlageseite (45; 95) aufweist, **dadurch gekennzeichnet, dass**
die Feststelleinrichtung (61; 111) zumindest ein Spannmittel (62; 112) sowie zumindest ein Lagermittel (63; 113) aufweist, und dass zwischen dem Spannmittel (62; 112) und dem Lagermittel (63; 113) ein Anlagebereich (36; 96) und zumindest ein Vertiefungsbereich (37; 97) vorgesehen sind.

2. Verbindungsvorrichtung nach Anspruch 1, **dadurch gekennzeichnet, dass** das zumindest eine Spannmittel (62; 112) im Anlagebereich (36; 96) und das zumindest eine Lagermittel (63; 113) im zumindest einen Vertiefungsbereich (37; 97) vorgesehen sind.

3. Verbindungsvorrichtung nach Anspruch 1 oder 2, **dadurch gekennzeichnet, dass** ein Absatz (35; 98) zwischen dem Anlagebereich (36; 96) und dem zumindest einen Vertiefungsbereich (37; 97) vorgesehen ist.

4. Verbindungsvorrichtung nach Anspruch 3, **dadurch gekennzeichnet, dass** der Absatz (35) an der Auflageseite (30) des Auflageabschnitts (29) des Basiselementes (22) vorgesehen ist.

5. Verbindungsvorrichtung nach einem der Ansprüche 1 bis 4, **dadurch gekennzeichnet, dass** der Auflageabschnitt (29; 79) des Basiselementes (22; 72) einen den Befestigungsabschnitt (23) an zumindest einer Seite des Befestigungsabschnitts (23) überragenden Fixierabschnitt (31) aufweist und zumindest ein Teil der Feststelleinrichtung (62; 112) im Bereich dieses Fixierabschnitts (31) vorgesehen ist.

6. Verbindungsvorrichtung nach einem der Ansprüche 1 bis 5, **dadurch gekennzeichnet, dass** das Basiselement (22) eine erste Durchführöffnung (32) für das zumindest eine Spannmittel (62) und eine zweite Durchführöffnung (34) für das zumindest eine Lagermittel (63) im Auflageabschnitt (29) sowie das Aufnahmeelement (41) eine erste Durchführöffnung (47) für das zumindest eine Spannmittel (62) und eine zweite Durchführöffnung (48) für das zumindest eine Lagermittel (63) im Anlageabschnitt (44) aufweist, wobei zumindest eine dieser Durchführöffnungen (32) als Langloch ausgebildet ist.

7. Verbindungsvorrichtung nach Anspruch 6, **dadurch gekennzeichnet, dass** die erste Durchführöffnung (32) für das zumindest eine Spannmittel (62) im Auflageabschnitt (29) des Basiselementes (22) als Langloch ausgebildet ist.

8. Verbindungsvorrichtung nach Anspruch 6 oder 7, **dadurch gekennzeichnet, dass** eine der Durchführöffnungen (34, 47) einen Gewindeabschnitt für ein am zumindest einen Spannmittel (62) und/oder für ein am zumindest einen Lagermittel (63) angeordnetes Gewinde aufweist.

9. Verbindungsvorrichtung nach einem der Ansprüche 6 bis 8, **dadurch gekennzeichnet, dass** die erste Durchführöffnung (47) für das zumindest eine mit einem Gewinde versehene Spannmittel (62) im Anlageabschnitt (44) des Aufnahmeelementes (41) einen Gewindeabschnitt und die zweite Durchführöffnung (34) für das zumindest eine mit einem Gewinde versehene Lagermittel (63) im Auflageabschnitt (29) des Basiselementes (22) einen Gewindeabschnitt aufweisen.

10. Ständerkonstruktion, insbesondere zur Anordnung von Solarpaneelen (7), mit mehreren Stützprofilen (12) und mit mehreren Tragprofilen (14, 15), wobei zwischen zumindest einem der Stützprofile (12) und zumindest einem der Tragprofile (14) eine Verbindungsvorrichtung (21) nach einem der Ansprüche 1 bis 9 vorgesehen ist.
